(19) Europäisches Patentamt
European Patent Office
Office européen des brevets

(11) EP 0 444 643 B1

(12) # EUROPEAN PATENT SPECIFICATION

(45) Date of publication and mention of the grant of the patent:
**08.05.1996 Bulletin 1996/19**

(51) Int. Cl.$^6$: **B01J 41/14**

(21) Application number: **91102943.7**

(22) Date of filing: **27.02.1991**

(54) **Anion exchanger**

Anionenaustauscher

Echangeur d'anions

(84) Designated Contracting States:
**DE FR GB IT**

(30) Priority: **28.02.1990 JP 48021/90**

(43) Date of publication of application:
**04.09.1991 Bulletin 1991/36**

(73) Proprietors:
- **Mitsubishi Chemical Corporation**
  **Chiyoda-ku Tokyo (JP)**
- **TOHOKU ELECTRIC POWER CO., INC.**
  **Aoba-ku, Sendai-shi, Japan (JP)**

(72) Inventors:
- **Tomoi, Masao**
  **Yokohama-shi, Kanagawa-ken (JP)**
- **Kiyokawa, Atsuo**
  **Yokohama-shi, Kanagawa-ken (JP)**

(74) Representative: **Wächtershäuser, Günter, Prof. Dr.**
**Patentanwalt,**
**Tal 29**
**D-80331 München (DE)**

(56) References cited:
**EP-A- 0 400 848**
**GB-A- 2 053 242**
**US-A- 2 860 097**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 444 643 B1

## Description

The present invention relates to a novel anion exchanger, particularly a crosslinked anion exchanger excellent in the heat durability.

Heretofore, as anion exchange resins, various resins are known which have, as functional groups, various anion exchange moieties, for example, amine-type substances such as primary, secondary and tertiary amines and quaternary ammonium. Among them, anion exchange resins of trialkylbenzyl ammonium salt type (e.g. trimethylbenzyl ammonium salt) wherein trialkyl amine is bonded by a covalent bond to the benzyl group of a polyvinyl aromatic compound, are particularly excellent in the ion exchange capacity and are widely used.

However, under a high temperature condition, the anion exchange resins of trimethylbenzyl ammonium salt type undergo detachment of the ion exchange groups due to decomposition of the ammonium salt, and they are not suitable for use under a high temperature condition for a long period of time. US-A-4,025,467 discloses that a strong basic anion exchanger can be obtained by reacting a quaternary amine to a crosslinked copolymer of an aromatic monovinyl hydrocarbon with an aromatic divinyl hydrocarbon having haloalkyl groups of the formula $-C_nH_{2n}-X$ wherein -X is chlorine or bromine, and $-C_nH_{2n}$ is an alkylene group with n being from 1 to 4. However, specifically disclosed is only the one wherein n is 1. If the one wherein n is 3 or 4 were produced in accordance with the method disclosed in this publication, the resulting $-(CH_2)_3-$ or $-(CH_2)_4-$ would be present only at a part of anion exchange groups of the entire resin, whereby the heat durability would not be improved. However, this publication describes nothing about the heat durability of the resin.

EP-A-0 400 848 discloses an anion exchange polymer which is used as sequestering agents to bind bile acid. The anion exchange polymer is prepared into the chloride form and used in the chloride form.

US-A-2,860,097 discloses a polyelectrolyte which can be used as an ion exchange resin in the form of granule. The resin is a copolymer of a vinyl-N-heterocyclic ethylenic compound and an ethylenic aromatic compound.

GB-A-2 053 242 relates to a basic cross-linked copolymer having substituted aminoethyl groups or trialkylammonium ethyl groups attached to an aromatic ring.

The known anion exchangers do not exhibit a sufficient heat durability.

Accordingly, an anion exchanger having higher heat durability has been desired.

The present invention provides a crosslinked anion exchanger which comprises structural units having a quaternary ammonium group of the following formula (a) and structural units derived from an unsaturated hydrocarbon group-containing crosslinkable monomer, and of which at least 90% of anion exchange groups are present in the form of a group represented by

$$-R-\overset{+}{\underset{X^-}{N}}R_1R_2R_3$$

as defined in the following formula (a):

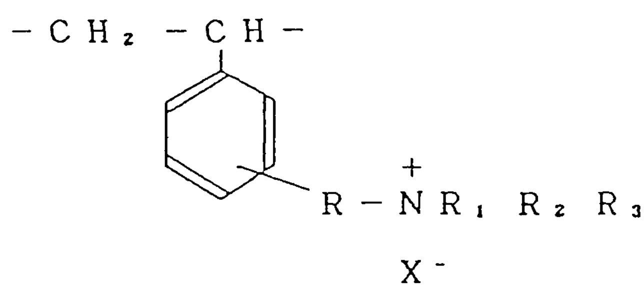

(a)

wherein R is a $C_3$-$C_{18}$ polymethylene group (inclusive of a cyclic hydrocarbon), each of $R_1$, $R_2$ and $R_3$ which are independent from one another, is a $C_1$-$C_8$ hydrocarbon group or a $C_1$-$C_8$ alkanol group, the benzene ring of the formula (a) may be substituted by an alkyl group or a halogen atom, or may be condensed with other aromatic ring,
with the proviso that no structural units derived from N-heterocyclic compounds are contained in the cross-linked anion exchanger, and X is $OH^-$.

This anion exchanger of the present invention is excellent in the heat durability and can be used in various fields where a heat durable anion exchanger is required.

Now, the present invention will be described in detail with reference to the preferred embodiments.

The anion exchanger of the present invention has quaternary substituted ammonium groups and is capable of adsorbing anions by ionic interaction.

In the above formula (a), R is a $C_3$-$C_{18}$ polymethylene group. This polymethylene group includes a case of a cyclic hydrocarbon. R is preferably a $C_3$-$C_{10}$ polymethylene group. Also preferred is a group containing a cyclic saturated hydrocarbon group such as a cyclohexyl group, for example

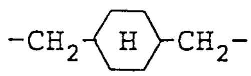, 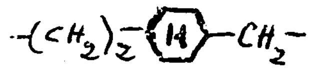

Each of $R_1$, $R_2$ and $R_3$ may be a $C_1$-$C_8$ straight chain or branched alkyl or alkenyl group, or such a group having a cyclohydrocarbon group such as a cyclohexyl group. Otherwise, an alkanol group having a hydroxyl group bonded to such a group, may be mentioned.

As an example of the group having a cyclic group, a group of the formula

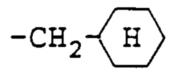

may be mentioned.

As the substituent for the benzene ring in the formula (a), an alkyl group such as an ethyl group, or a halogen atom such as chlorine, bromine or iodine, may be mentioned. As an example of the case where the benzene ring is condensed with other aromatic ring, a naphthalene ring may be mentioned.

As such a benzene ring, a benzene ring having no substituent other than

$$-R-\overset{+}{\underset{X^-}{N}}R_1R_2R_3$$

is preferred. Also preferred is the one having a methyl group or an ethyl group as the substituent.

$X^-$ in the formula (a) is not particularly limited so long as it is an anion. For example, a halogen ion such as $Cl^-$, $Br^-$ or $I^-$, or other anions such as sulfate anion, $NO_3^-$, $OH^-$ and

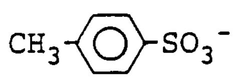,

may be mentioned. In the case of a bivalent anion such as a sulfate anion, one molecule of such an anion is adsorbed to two structural unit molecules of the formula (a).

The present invention is characterized in that a group represented by

$$-R-\overset{+}{\underset{X^-}{N}}R_1R_2R_3$$

as defined in the above formula (a) constitutes at least 90% of all anion exchange groups of the crosslinked anion exchanger. Namely, in the present invention, when R is a non-cyclic polymethylene group, R is a $C_3$-$C_{18}$ straight chain polymethylene group, and the group represented by $-R-\overset{+}{N}R_1R_2R_3 \cdot X^-$ is bonded to the terminal of the straight chain. In other words, even if the carbon number for R is large, the group wherein R is a branched chain or the quaternary ammonium group is attached at an intermediate position rather than at the terminal of R, is less than 10% of the total anion exchange groups of the exchanger. In this respect, the anion exchanger of the present invention is different from conventional anion exchange resins, and for this reason, the heat durability is improved.

The anion exchanger of the present invention must have the anion exchange groups represented by $-R-\overset{+}{N}R_1R_2R_3 \cdot X^-$ in the above mentioned range. It is particularly preferred that substantially all such anion exchange groups are present in the form of the structural units of the formula (a).

The anion exchanger of the present invention can be prepared, for example, by the following method.

The structural units of the formula (a) are usually provided by a precursor monomer of the following formula (b):

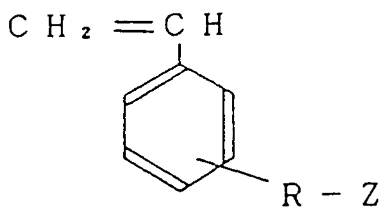

( b )

wherein R is as defined above with respect to the formula (a), and Z is a group active for substitution such as bromine, chlorine, iodine or a tosyl group. The benzene ring in the formula (b) may be substituted by an alkyl group or a halogen atom, or may be condensed with other aromatic ring to form e.g. a naphthalene ring.

As the base monomer for the precursor monomer of the formula (b), styrene is preferred. However, as other base monomers, ethylvinyl benzene, vinyl toluene and vinyl naphthalene may be mentioned.

The precursor monomer can be produced usually by a known method as disclosed in, for example, "Journal of Polymer Science, Polymer Chemistry Edition, volume 20, (1982) P. 3015".

Namely, it can be obtained by reacting a polyalkylene dihalide to a chloromethylated base monomer such as chloromethyl styrene by a Grignard method. Here, the polyalkylene dihalide may be the one having a $C_3$-$C_{18}$ polymethylene group, preferably the one having a $C_3$-$C_{10}$ polymethylene group. If the carbon number is small, the effect for the heat durability according to the present invention tends to be hardly expected. On the other hand, if the carbon number is large, the ion exchange capacity per unit weight decreases, which is practically undesirable from the industrial view point.

Further, the precursor monomer of the formula (b) can be prepared also by a method wherein a polyalkylene dihalide is reacted to a chlorinated base monomer such as chlorostyrene by a Grignard method.

The unsaturated hydrocarbon group-containing crosslinkable monomer required to form the anion exchanger of the present invention may, for example, be divinyl benzene, trivinyl benzene, divinyl toluene, divinyl naphthalene, divinyl xylene, ethylene glycol dimethacrylate, diethylene glycol dimethacrylate or trimethylolpropane trimethacrylate. Among them, divinyl benzene is preferred. To the anion exchanger of the present invention, a further copolymer component may be introduced, as the case requires, by using an addition polymerizable monomer other than the precursor monomer and the crosslinkable monomer. Specific examples of such an addition polymerizable monomer include styrene, methacrylates such as methyl methacrylate, ethyl methacrylate and propyl methacrylate, methacrylic acid, acrylates such as methyl acrylate, ethyl acrylate and propyl acrylate, acrylic acid, acrylonitrile, methacrylonitrile, ethyl vinyl benzene, vinyl toluene, vinyl naphthalene, butadiene and isoprene.

The anion exchanger of the present invention can be prepared by forming a crosslinked copolymer by these starting material monomers and then introducing ammonium groups to the -R-Z moieties of the structural units derived from the precursor monomer of the formula (b). This crosslinked copolymer can be produced in accordance with a conventional method, and it is usually obtained in the form of a spherical crosslinked copolymer. Namely, the precursor monomer to form structural units of the formula (a) i.e. the precursor monomer represented by the formula (b), the unsaturated hydrocarbon group-containing crosslinkable monomer and the addition polymerizable monomer to be used as the case requires, are subjected to suspension polymerization in accordance with a conventional method in the presence of a polymerization initiator. The precursor monomer to provide structural units of the formula (a), is used in an amount of from 20 to 100% by weight relative to the total amount of the starting material monomers.

The compositional ratio of the unsaturated hydrocarbon group-containing crosslinkable monomer gives a substantial influence over the insolubilization of the anion exchanger of the present invention. Usually, if the compositional ratio of the unsaturated hydrocarbon group-containing crosslinkable monomer is low, it tends to be difficult to accomplish insolubilization of the anion exchanger. On the other hand, if the compositional ratio of the unsaturated hydrocarbon group-containing crosslinkable monomer is high, the proportion of the ion exchange component of the anion exanger tends to be low, such being practically undesirable. Accordingly, for the preparation of the anion exchanger of the present invention, the unsaturated hydrocarbon group-containing crosslinkable monomer is used usually in a weight ratio of from 0.1 to 55%, preferably from 0.5 to 25%, relative to the total amount of the starting material monomers.

On the other hand, the addition polymerizable monomer as a copolymer component is used in a weight ratio of from 0 to 50%, preferably from 0 to 20%, relative to the total amount of the starting material monomers.

As the polymerization initiator to be used for the suspension polymerization, benzoyl peroxide, lauroyl peroxide, t-butylhydro peroxide or azobisisobutyronitrile may be employed. It is used usually in an amount of from 0.1 to 5% by weight relative to the total amount of starting material monomers.

The polymerization temperature varies depending upon the type and concentration of the polymerization initiator. However, it is usually selected within a range of from 40 to 100°C.

As a method for introducing ammonium groups to the crosslinked copolymer thus prepared, any conventional method may be employed. For example, a method may be employed wherein the resin is suspended in a solvent and a substituted amine of the formula

$$R_1-\overset{\overset{\displaystyle R_2}{|}}{N}-R_3$$

wherein $R_1$, $R_2$ and $R_3$ are as defined above with respect to the formula (a) is reacted thereto. As the solvent to be used for this introduction reaction, water, an alcohol, toluene, dioxane and dimethylformamide may, for example, be used alone or in combination. The reaction temperature substantially varies depending upon the type of the substituted amine and the type of the solvent. Usually, however, it is selected within a range of from 20 to 100°C.

Thereafter, the salt type may be changed to various anion types by conventional methods to obtain the anion exchangers of the present invention.

The anion exchanger of the present invention prepared as described above, is particularly preferably composed of from 20 to 99.5% by weight of structural units having a group represented by

$$-R-\underset{X^-}{\overset{+}{N}}R_1R_2R_3$$

as defined in the formula (a), from 0.1 to 55% by weight of structural units derived from the unsaturated hydrocarbon group-containing crosslinkable monomer and from 0 to 20% by weight of structural units derived from other addition polymerizable monomer.

As the anion exchanger of the present invention, X is preferably a hydroxyl ion, and when X is an anion other than a hydroxyl ion, it is preferably converted to a hydroxyl ion. Particularly preferred is the one which has an ion exchange capacity remaining rate of at least 90% and a volume maintaining rate of at least 90% even when heated in a 0.1 N sodium hydroxide aqueous solution at 100°C for 60 hours.

The shape of the anion exchanger of the present invention is not particularly limited. It includes, in addition to those of beads shape as described above, those having porosity imparted by a conventional method. Further, those made into various shapes such as fibrous, powder, plate-like and membrane-like shapes are included in the present invention.

Now, the present invention will be described in further detail with reference to Examples. However, it should be understood that the present invention is by no means restricted to such specific Examples.

PREPARATION EXAMPLE 1

Preparation of a ω-haloalkylstyrene

100 g of chloromethylstyrene was reacted with metal magnesium at 0°C for 3 hours under stirring in a diethyl ether flushed with nitrogen to obtain a magnesium composite. The solvent was replaced by tetrahydrofuran flushed with nitrogen. Then, 1,3-dibromopropane and $Li_2CuCl_4$ were dropwise added thereto at 0°C. The reaction was continued at 0°C for 5 hours, and the obtained product was fractionated by distillation. 4-bromobutylstyrene was obtained under 40 Pa (0.3 Torr) at 120°C, and the yield based on the starting material chloromethylstyrene was 35%. Identification of 4-bromobutylstyrene was conducted by the NMR method disclosed in "Journal of Polymer Science, Polymer Chemistry Edition, volume 20 (1982), p. 3015".

Preparation of a crosslinked ω-haloalkylstyrene

To 96.4 parts by weight of 4-bromobutylstyrene thus obtained and 3.6 parts by weight of divinyl benzene of industrial grade (purity: 55%, the rest being composed mainly of ethyl vinyl benzene), 1.0 part by weight of azobisisobutyronitrile was added, and the mixture was subjected to suspension polymerization under a nitrogen atmosphere at 70°C for 18 hours to obtain polymer beads in a yield of 90%.

Preparation of an anion exchanger

100 parts by weight of crosslinked 4-bromobutylstyrene thus obtained, was suspended in 300 parts by weight of dioxane, stirred and swelled for two hours.

Then, 3 mol equivalent, based on the bromo group, of trimethylamine was dropwise added thereto, and the suspension was reacted continuously at 50°C for 10 hours.

The obtained anion exchanger was thoroughly washed with deionized water, and the salt type was converted to a chlorine type.

Thus, an anion exchanger having the following properties was obtained.

| | |
|---|---|
| Ion exchange capacity: | 0.79 meq/mℓ |
| | 3.77 meq/g |
| Water content: | 67.4% |

This anion exchanger is designated as Sample A.

The above properties were measured in accordance with the methods described by Honda et al in "Ion Exchange Resin, published by Hirokawa Shoten, p. 17-56".

PREPARATION EXAMPLE 2

An anion exchanger was prepared in the same manner as in Preparation Example 1 except that in the preparation of a crosslinked ω-haloalkylstyrene in Preparation Example 1, 4-bromobutylstyrene was changed to 92.7 parts by weight and divinyl benzene of industrial grade was changed to 7.3 parts by weight.

Thus, an anion exchanger having the following properties was obtained.

| | |
|---|---|
| Ion exchange capacity: | 1.10 meq/mℓ |
| | 3.65 meq/g |
| Water content: | 54.1% |

This anion exchanger is designated as Sample B.

PREPARATION EXAMPLE 3

An anion exchanger was prepared in the same manner as in Preparation Example 2 except that in the preparation of a ω-haloaklylstyrene in Preparation Example 1, 1,6-dibromohexane was used instead of 1,3-dibromopropane.

Thus, an anion exchanger having the following properties was obtained.

| | |
|---|---|
| Ion exchange capacity: | 1.16 meq/mℓ |
| | 3.07 meq/g |
| Water content: | 44.1% |

This anion exchanger is designated as Sample C. The intermediate 7-bromoheptylstyrene was fractionated by distillation under 53 Pa (0.4 Torr) at 120°C.

PREPARATION EXAMPLE 4

An anion exchanger was obtained in the same manner as in Preparation Example 1 except that in the preparation of an ω-haloalkylstyrene in Preparation Example 1, 1,4-bis(bromomethyl)cyclohexane was used instead of 1,3-dibromopropane.

Thus, an anion exchanger having the following properties was obtained.

| | |
|---|---|
| Ion exchange capacity: | 0.96 meq/mℓ |
| | 2.77 meq/g |
| Water content: | 49.6% |

This anion exchanger is designated as Sample D.

The intermediate 2-(4-bromomethylcyclohexylene)ethylstyrene was fractionated by distillation under 33 Pa (0.25 Torr) at 120°C.

PREPARATION EXAMPLE 5

Preparation of 3-bromopropylstyrene

83.16 g of p-chlorostyrene was reacted with metal magnesium at 35°C for 5 hours under stirring in tetrahydrofuran flushed with nitrogen to obtain a magnesium composite. This composite was dropwise added to a solution mixture comprising tetrahydrofuran, 1,3-dibromopropane and $Li_2CuCl_4$ at 30°C. The reaction was continued at 30°C for two hours. Then, the obtained product was fractionated by distillation. 3-bromopropylstyrene was obtained under 27 Pa (0.2 Torr) at 110°C, and the yield based on the starting material p-chlorostyrene was 47%. Identification of 3-bromopropylstyrene was conducted by the NMR method.

Preparation of crosslinked 3-bromopropylstyrene

To 92.7 parts by weight of 3-bromopropylstyrene thus obtained and 7.3 parts by weight of divinyl benzene of industrial grade (purity: 55%, and the rest being composed mainly of ethyl vinyl benzene), 1.0 part by weight of azobisisobutyronitrile was added, and the mixture was subjected to suspension polymerization under a nitrogen atmosphere at 70°C for 8 hours to obtain polymer beads in a yield of 79%.

Preparation of an anion exchanger

10 parts by weight of crosslinked 3-bromopropylstyrene thus obtained, was suspended in 100 parts by weight of dioxane, stirred and swelled for two hours.

Then, 10 mol equivalent, based on the bromo group, of trimethylamine was dropwise added thereto, and the suspension was continuously reacted at 50°C for 10 hours.

The anion exchanger thereby obtained was thoroughly washed with deionized water, and then the salt type was converted to a chlorine type.

Thus, an anion exchanger having the following properties were obtained.

| | |
|---|---|
| Ion Exchange capacity: | 1.37 meq/mℓ |
| | 3.80 meq/g |
| Water content: | 49.6% |

This anion exchanger is designated as Sample E.

EXAMPLE 1

Short period heat durability tests

Short period heat durability comparative tests were conducted with respect to Samples A, B, C and D obtained in the above Preparation Examples and Diaion SA102 (trade name, manufactured by Mitsubishi Kasei Corporation). 10 mℓ of each anion exchanger was measured as a chlorine type by means of a measuring cylinder, the chlorine type was converted to a free type by a column method. Centrifugal filtration was conducted to remove excess water, and then the anion exchanger was put into a test tube containing 40 mℓ of a 0.1 N sodium hydroxide aqueous solution.

The test tube was placed in an autoclave, and then the autoclave was heated to conduct a short period heat durability test.

The decrease of the ion exchange capacity when the anion exchanger was heated at 100°C for 60 hours was as follows.

Here, the ion exchange capacity after the test is represented based on the volume before the test.

| Sample | Diaion SA102 | A | B | C | D |
|---|---|---|---|---|---|
| In exchange capacity before the test (meq/mℓ) | 0.83 | 0.79 | 1.10 | 1.16 | 0.96 |
| Ion exchange capacity after the test (meq/mℓ) | 0.72 | 0.69 | 1.07 | 1.14 | 0.94 |
| Ion exchange capacity remaining ratio (%) | 86.7 | 87.3 | 97.3 | 98.3 | 97.9 |
| Volume maintaining rate (%) | 80.2 | 96.0 | 94.0 | 95.0 | 95.8 |

EXAMPLE 2

Long period heat durability tests

Long period heat durability comparative tests were conducted with respect to Sample E obtained in Preparation Example 5 and Diaion SA10A (trade name, manufactured by Mitsubishi Kasei Corporation).

100 mℓ of each anion exchanger was measured as a free type by means of a measuring cylinder and put into a glass autoclave by means of deionized water to bring the total volume to 160 mℓ. While blowing nitrogen thereinto, the autoclave was heated at 50°C for one hour to remove oxygen in water. The autoclave was closed and a long period heat durability test was conducted by maintaining it under a heated condition at 100°C for 720 hours.

The decreases of the ion exchange capacity and the volume after the long period heat durability test were as follows.

Here, the ion exchange capacity after the test is represented based on the volume before the test.

| | Sample | Diaion SA10A | E |
|---|---|---|---|
| Before the test | Ion exchange capacity (meq/mℓ) | 1.36 | 1.37 |
| After the test | Ion exchange capacity (meq/mℓ) | 0.82 | 1.09 |
| | Remaining rate (%) | 60.3 | 79.2 |
| | Volume maintaining rate (%) | 82.0 | 92.0 |

## Claims

1. A crosslinked anion exchanger which comprises structural units having a quaternary ammonium group of the following formula (a) and structural units derived from an unsaturated hydrocarbon group-containing crosslinkable monomer, and of which at least 90% of anion exchange groups are present in the form of a group represented by

$$-R-\overset{+}{N}R_1R_2R_3 \; X^-$$

as defined in the following formula (a):

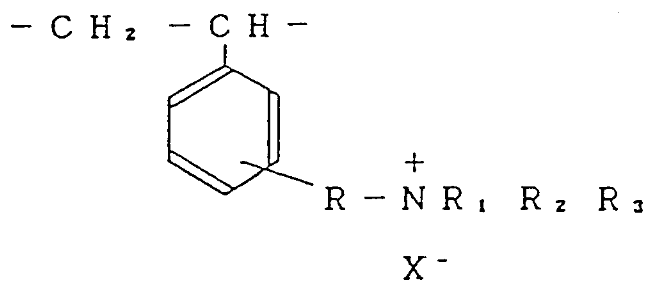

(a)

wherein R is a $C_3$-$C_{18}$ polymethylene group (inclusive of a cyclic hydrocarbon), each of $R_1$, $R_2$ and $R_3$ which are independent from one another, is a $C_1$-$C_8$ hydrocarbon group or a $C_1$-$C_8$ alkanol group, the benzene ring of the formula (a) may be substituted by an alkyl group or a halogen atom, or may be condensed with other aromatic ring, with the proviso that no structural units derived from N-heterocyclic compounds are contained in the cross-linked anion exchanger, and X is $OH^-$.

2. The crosslinked anion exchanger according to Claim 1 of which substantially all of anion exchange groups are present in the form of structural units containing a group represented by

$$-R-\overset{+}{\underset{X^-}{N}}R_1R_2R_3$$

as defined in the formula (a).

3. The crosslinked anion exchanger according to Claim 1, which contains from 0.1 to 55% by weight of the units derived from an unsaturated hydrocarbon group-containing crosslinkable monomer.

4. The crosslinked anion exchanger according to Claim 3, which contains from 0.5 to 25% by weight of the structural units derived from an unsaturated hydrocarbon group-containing crosslinkable monomer.

5. The crosslinked anion exchanger according to Claim 1, wherein R in the formula (a) is a $C_3$-$C_{10}$ polymethylene group (inclusive of a cyclic-hydrocarbon).

6. The crosslinked anion exchanger according to Claim 1, wherein each of $R_1$, $R_2$ and $R_3$ in the formula (a) is a methyl group or an ethyl group.

7. The crosslinked anion exchanger according to Claim 1, wherein the benzene ring in the formula (a) had no substituent other than

$$-R-\overset{+}{\underset{X^-}{N}}R_1R_2R_3.$$

8. The crosslinked anion exchanger according to Claim 1, wherein the unsaturated hydrocarbon group-containing crosslinkable monomer is divinyl benzene.

9. The crosslinked anion exchanger according to claim 1, which has a heat durability wherein a volume of the anion exchanger is maintained in a rate of at least 95% after being heated in a 0.1N sodium hydroxide aqueous solution at 100°C for 60 hours as a hydroxide type.

## Patentansprüche

1. Vernetzter Anionenaustauscher, umfassend Struktureinheiten mit einer quarternären Ammoniumgruppe der folgenden Formel (a) und Struktureinheiten, die von einem ungesättigten Kohlenwasserstoffgruppen-haltigen vernetzbaren Monomeren stammen, und wobei mindestens 90% der Anionenaustauschgruppen in der Form einer Gruppe vorliegen, die dargestellt wird durch

$$-R-\overset{+}{N}R_1R_2R_3,\quad X^-$$

wie in der folgenden Formel (a) definiert:

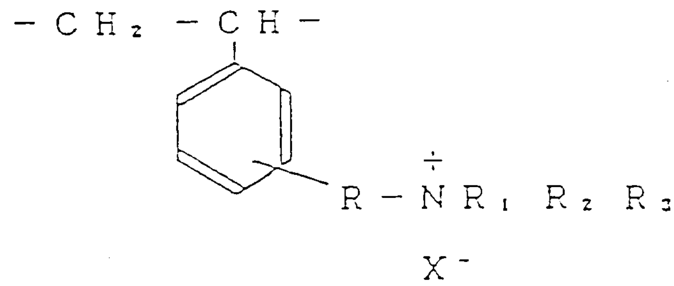

(a)

wobei R eine $C_3$-$C_{18}$-Polymethylengruppe (einschließlich ein cyclischer Kohlenwasserstoff) ist, jedes von $R_1$, $R_2$ und $R_3$, welche unabhängig voneinander sind, eine $C_1$-$C_8$-Kohlenwasserstoffgruppe oder eine $C_1$-$C_8$-Alkanolgruppe ist, der Benzolring der Formel (a) durch eine Alkylgruppe oder ein Halogenatom substituiert sein kann oder mit einem anderen aromatischen Ring kondensiert sein kann, mit der Maßgabe, daß keine Struktureinheiten in dem vernetzten Anionenaustauscher enthalten sind, die von N-heterocyclischen Verbindungen stammen, und X für $OH^-$ steht.

2. Vernetzter Anionenaustauscher gemäß Anspruch 1, wobei im wesentlichen alle Anionenaustauschergruppen in der Form von Struktureinheiten vorliegen, die eine Gruppe enthalten, welche dargestellt wird durch

$$-R-\overset{+}{N}R_1R_2R_3\quad X^-$$

gemäß der Definition in der Formel (a).

3. Vernetzter Anionenaustauscher gemäß Anspruch 1, welcher 0,1 bis 55 Gew.-% der Einheiten enthält, die von einem vernetzbaren Monomeren mit ungesättigter Kohlenwasserstoffgruppe stammen.

4. Vernetzter Anionenaustauscher gemäß Anspruch 3, welcher 0,5 bis 25 Gew.-% der Struktureinheiten enthält, die von einem vernetzbaren Monomeren mit ungesättigter Kohlenwasserstoffgruppe stammen.

5. Vernetzter Anionenaustauscher gemäß Anspruch 1, wobei R in der Formel (a) für eine $C_3$-$C_{10}$-Polymethylengruppe (einschließlich einen cyclischen Kohlenwasserstoff) steht.

6. Vernetzter Anionenaustauscher gemäß Anspruch 1, wobei jedes von $R_1$, $R_2$ und $R_3$ in der Formel (a) eine Methylgruppe oder eine Ethylgruppe ist.

7. Vernetzter Anionenaustauscher gemäß Anspruch 1, wobei der Benzolring in der Formel (a) keinen anderen Substituenten als

$$-R-\overset{+}{N}R_1R_2R_3 \quad X^-$$

aufweist.

8. Vernetzter Anionenaustauscher gemäß Anspruch 1, wobei das vernetzbare Monomere mit ungesättigter Kohlenwasserstoffgruppe Divinylbenzol ist.

9. Vernetzter Anionenaustauscher gemäß Anspruch 1, der eine Hitzebeständigkeit aufweist, bei der ein Volumen des Anionenaustauschers mit einer Rate von mindestens 95% aufrechterhalten wird, nachdem er als ein Hydroxidtyp in einer 0,1 N wässerigen Natriumhydroxidlösung bei 100°C während 60 Stunden erhitzt wurde.

**Revendications**

1. Echangeur d'anions réticulé, qui comprend des unités structurelles présentant un groupe ammonium quaternaire de la formule (a) ci-dessous et des unités structurelles dérivées d'un monomère réticulable contenant un groupe hydrocarboné insaturé, et dont au moins 90% des groupes d'échange d'anions sont présents sous la forme d'un groupe représenté par

$$-R-\overset{+}{N}R_1R_2R_3 \quad X^-$$

tel que défini dans la formule (a) ci-dessous:

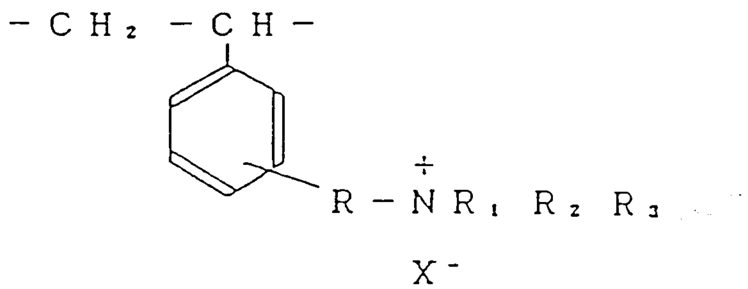

(a)

dans laquelle R représente un groupe polyméthylène en $C_3$ à $C_{18}$ (y compris un hydrocarbure cyclique), chacun parmi $R_1$, $R_2$ et $R_3$, qui sont indépendants l'un de l'autre, représente un groupe hydrocarboné en $C_1$ à $C_8$ ou un groupe alcanol en $C_1$ à $C_8$, le cycle benzène de la formule (a) pouvant être substitué par un groupe alkyle ou un atome d'halogène, ou être condensé avec un autre cycle aromatique, avec la condition préalable qu'aucune unité structurelle dérivée de composés N-hétérocycliques n'est contenue dans l'échangeur d'anions réticulé, et X représente $OH^-$.

2. Echangeur d'anions réticulé selon la revendication 1, dans lequel sensiblement tous les groupes d'échange d'anions sont présents sous la forme d'unités structurelles contenant un groupe représenté par

$$-R-\overset{+}{N}R_1R_2R_3 \quad X^-$$

tel que défini dans la formule (a).

**3.** Echangeur d'anions réticulé selon la revendication 1, qui contient de 0,1 à 55% en poids des unités dérivées d'un monomère réticulable contenant un groupe hydrocarboné insaturé.

**4.** Echangeur d'anions réticulé selon la revendication 3, qui contient de 0,5 à 25% en poids des unités structurelles dérivées d'un monomère réticulable contenant un groupe hydrocarboné insaturé.

**5.** Echangeur d'anions réticulé selon la revendication 1, dans lequel R dans la formule (a) est un groupe polyméthylène en $C_3$ à $C_{10}$ (y compris un hydrocarbure cyclique).

**6.** Echangeur d'anions réticulé selon la revendication 1, dans lequel chacun parmi $R_1$, $R_2$ et $R_3$ dans la formule (a) est un groupe méthyle ou un groupe éthyle.

**7.** Echangeur d'anions réticulé selon la revendication 1, dans lequel le cycle benzène dans la formule (a) n'a pas d'autre substituant que

$$-R-\overset{+}{N}R_1R_2R_3 .\quad X^-$$

**8.** Echangeur d'anions réticulé selon la revendication 1, dans lequel le monomère réticulable contenant un groupe hydrocarboné insaturé est le divinylbenzène.

**9.** Echangeur d'anions réticulé selon la revendication 1, qui présente une stabilité à la chaleur telle qu'un volume de l'échangeur d'anions est conservé à raison d'au moins 95% après avoir été chauffé sous la forme de type hydroxyde dans une solution aqueuse 0,1 N d'hydroxyde de sodium à 100°C pendant 60 heures.